# EUROPEAN PATENT SPECIFICATION

(11) **EP 1 963 990 B1**
(45) Date of publication and mention of the grant of the patent: **07.03.2012**
(21) Application number: 06838420.5
(22) Date of filing: 22.11.2006
(51) Int. Cl.: G06F 17/00, G06F 3/14

(54) **AUTOMATING FONT CONTROL VALUE DETERMINATION**
AUTOMATISCHE SCHRIFTARTSTEUERWERTBESTIMMUNG
AUTOMATISATION DE LA DÉTERMINATION DE LA VALEUR DE COMMANDE DE LA POLICE

(30) Priority: 19.12.2005 US 312921
(43) Date of publication of application: 03.09.2008
(73) Proprietor: Microsoft Corporation, Redmond, WA 98052-6399 (US)
(72) Inventor: STAMM, Beat, Redmond, WA 98052-6391 (US); HITCHCOCK, Gregory, Redmond, WA 98052-6399 (US); DUGGAN, Michael, J., Redmond, WA 98052-6399 (US)
(74) Representative: Goddar, Heinz J.
(86) International application number: PCT/US2006/045435
(87) International publication number: WO 2007/075250

(56) References cited:
- JP-A- 03 269 665
- US-A- 5 598 520
- US-A- 5 664 086
- US-A- 5 664 216
- US-A- 5 803 629
- US-A1- 2004 119 715
- US-B1- 6 714 677
- US-B1- 7 184 046
- HU C., HERSCH R. D.: "Parametrizable Fonts Based on Shape Components" IEEE COMPUTER GRAPHICS AND APPLICATIONS, vol. 21, no. 3, May 2001 (2001-05), pages 70-85, XP002596978
- PENG N S ET AL: "Mean shift blob tracking with kernel histogram filtering and hypothesis testing", PATTERN RECOGNITION LETTERS, ELSEVIER, AMSTERDAM, NL, vol. 26, no. 5, 1 April 2005 (2005-04-01), pages 605-614, XP025292469, ISSN: 0167-8655, DOI: DOI:10.1016/J.PATREC.2004.08.023 [retrieved on 2005-04-01]
- JAIN A K ET AL: "Data clustering: a review", ACM COMPUTING SURVEYS, ACM, NEW YORK, NY, US, US, vol. 31, no. 3, 1 September 1999 (1999-09-01), pages 264-323, XP002165131, ISSN: 0360-0300, DOI: DOI:10.1145/331499.331504
- C. Fraley: "How Many Clusters? Which Clustering Method? Answers Via Model-Based Cluster Analysis", The Computer Journal, vol. 41, no. 8, 1 August 1998 (1998-08-01) , pages 578-588, XP55002854, ISSN: 0010-4620, DOI: 10.1093/comjnl/41.8.578

## Description

### Background

Many computing systems can present information to a user by displaying text on a screen or some other media, such as a printed page. The physical characteristics of the human visual system and the various types and qualities of electronic display or print technology offer unique challenges to a type designer when developing typefaces in which the text can be presented.

In typography, a typeface consists of a coordinated set of character designs. A typeface is usually comprised of an alphabet of letters, numerals, punctuation marks, ideograms, and symbols (collectively referred to as characters or glyphs). Arial, Times New Roman, Verdana, and Georgia are four examples of typefaces. Traditionally, the word "font" denotes a complete typeface in a particular size (usually measured in points), weight (e.g., light, book, bold, black), and orientation (e.g., roman, italic, oblique). For a given typeface, each character typically corresponds to a single glyph, although certain characters of some typefaces may include multiple glyphs.

A typeface can originate as a series of glyphs drawn on paper or created in a computer drawing application. For example, the drawn glyphs may be scanned and digitized to render outline representations of each glyph. Alternatively, a typeface can be converted from typefaces of a different font format (e.g., from raster format to an outline in TrueType format). By at least these method, the glyphs of a given typeface can be defined by outline definitions in a font file.

Generally, a glyph outline definition specifies a series of points and/or contours. A simple glyph outline may have only one contour whereas a complex glyph may have two or more contours. Furthermore, composite glyphs can be constructed by combining two or more simpler glyphs, and certain control characters with no visual manifestation map to glyphs with no contours.

When a glyph is to be rendered, the glyph outline is read from a font file and font cache scaled to a specified font size (e.g., 12 point) and display resolution (e.g., 72 dpi or dots per inch). The scaled outline is then altered by font hinting instructions to correct any perceived errors introduced by the scaling process, where the interaction of font size and display resolution can result in rounding error and introduce unintended and unwanted distortion to the glyph outline. Exemplary errors may include without limitation drop-outs (i.e., unintended gaps in the glyph), unintended variations in stroke weights or character heights, etc.

In one aspect of font hinting, instructions may access a control value table (CVT) to determine font control values that are to be applied consistently across the typeface. The font control values can specify consistent characteristics of glyphs within the typeface. For example, consistent stroke weights may be specified for vertical strokes of glyphs in the selected typeface. Other exemplary font control values may define the height of a lower case letter above a baseline, the distance a rounded bottom of a letter (e.g., `O') may descend below a baseline, the space between the dot and the top of the vertical stroke of a lower case `i', etc. The font hinting instructions can then alter the scaled font outlines to comply with the font control values, thereby yielding consistent characteristics for glyphs of a given typeface.

However, selecting the font control values representative of a large number of glyphs in a typeface is challenging. For example, the original outlines of different glyphs may exhibit some subtle and some not-so-subtle variations of a given font property (e.g., vertical stroke weights) across the typeface. As such, the measured font property can vary noticeably across a given typeface. Therefore, a typographer may manually and subjectively evaluate a distribution of the font property across multiple glyphs of a typeface to select one or more "acceptable" font control values to represent the entire or some substantial portion of a typeface. Unfortunately, manual determination of font control values is too expensive and time-consuming. The document US 5 598 520 (Harel et al.) relates to a method of font hinting. The method generates font control values for use in font hinting which begins by measuring a font property and clustering the measures to produce a plurality of clustered font control values.

### Summary

Implementations described and claimed herein allow automation of font control value selection by progressively filtering a distribution of font property values until a threshold number of font control values is identified. Font-hinting instructions may be parameterized using these algorithmically determined font control values, which may be derived from measurements of font properties of glyph outlines across the typeface. In one implementation, a distribution of the measured font properties is progressively filtered to identify a distribution characteristic satisfying a determined criterion, such as a threshold condition. The font property values corresponding to the threshold-satisfying points of the distribution are assigned as font control values.

In some implementations, articles of manufacture are provided as computer program products. One implementation of a computer program product provides a computer program storage medium readable by a computer system and encoding a computer program. Another implementation of a computer program product may be provided in a computer data signal embodied in a carrier wave by a computing system and encoding the computer program. Other implementations are also described and recited herein.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### Brief Descriptions of the Drawings

FIG. 1 illustrates an exemplary auto hinting module in a font generation system.

FIG. 2 illustrates exemplary progressive filtering results.

FIG. 3 illustrates exemplary operations for automated font control value determination.

FIG. 4 illustrates an exemplary system that may be useful in implementing the described technology.

### Detailed Descriptions

Scalable outline fonts are defined as continuous shapes or outlines described by coordinates, mathematical curves, and/or other parameters. The base outlines are described in a font definition that can be read from memory (e.g., a font file or font cache) when an individual glyph is to be displayed or otherwise output (e.g., printed). Font definitions may be based on a Cartesian grid having x and y axes in font design units (or "font units), although other coordinate frameworks may be employed. Using such font units, a base outline of the glyph in the specified typeface may be described without regard to the displayed glyph size or the resolution of the output device.

When a glyph is to be generated, the base outline is scaled to a specified size and then used to create a discrete raster of dots (e.g., a bitmap of pixels) on a display or hardcopy output device at the specified size. If such a bitmap is made in a simplistic way, such as by simply turning off each pixel or printer cell that has its center lying within the scaled outline, then a number of visually distracting artifacts can arise, such as misalignments of features and breaks in shapes (referred to as "drop-outs"). For example, if the glyph is scaled and rendered at a small size and/or to a low resolution display, the pixels turned on/off to represent the glyph will only grossly approximate the scaled outline because the resulting pixels are too large and discrete in nature to perfectly follow the scaled outline.

As such, additional processing, called "font hinting", may be employed to optimize the rendering of the glyph for a given size and display resolution. Font hinting code can be included in or associated with the font definition of each individual glyph. Font hinting provides information to the raster image processor (RIP) to enhance the rasterization of fonts. For example, font hinting may be used to alter or distort the scaled outline so as to improve the rendering. Among other uses, font hinting may be used to (1) ensure strokes intended to be equally thick appear equally thick; (2) suppress undesired overshoots (e.g., when a rounded letter, such as "O", is unintentionally scaled to appear taller than flat letters, such as "M"); (3) line up features on different glyphs that should be at the same height; (4) keep the spaces between stems open (e.g., the spaces between the vertical strokes of an "m" should be visible); (5) force consistent spacing between sets of parallel strokes; and (6) compensate for errors in the rasterization algorithm, such as errors causing drop-outs.

In one implementation, font-hinting instructions can be divided into two categories: (1) per-font, and (2) per-glyph. The per-font instructions alter the outlines of individual glyphs based on font control values associated with multiple characters in the typeface. For example, a vertical stroke weight associated with most or all glyphs in a Courier New typeface is 84 font units. Accordingly, the per-font instructions can alter the vertical stroke weights of individual scaled outlines of such glyphs to satisfy the specified vertical stroke weight for the Courier New typeface. In this manner, glyphs of a common font tend to render with consistent characteristics, so that all such glyphs reflect a similar personality and readability across the typeface. In contrast, the per-glyph instructions are directed to make specific alterations for individual glyphs. For example, per-glyph instructions are likely to ensure that the vertical strokes in a lower case "m" are rendered with uniform, discernable vertical stroke weights and counter stroke weights (e.g., the "spaces" between the vertical strokes of the glyph).

Per-font instructions may be parameterized using per-font control values (called "font control values") from a control value table (CVT). Individual font control values may be derived from measurements of properties (called "font properties") of glyph outlines across the typeface. However, as these measurements may vary significantly across the typeface, one or more font control value selections are algorithmically made from a distribution of possible font property measurements and applied across multiple glyphs of the typeface. The algorithmic selection is executed by an auto-hinting module to obtain the font control values for the CVT.

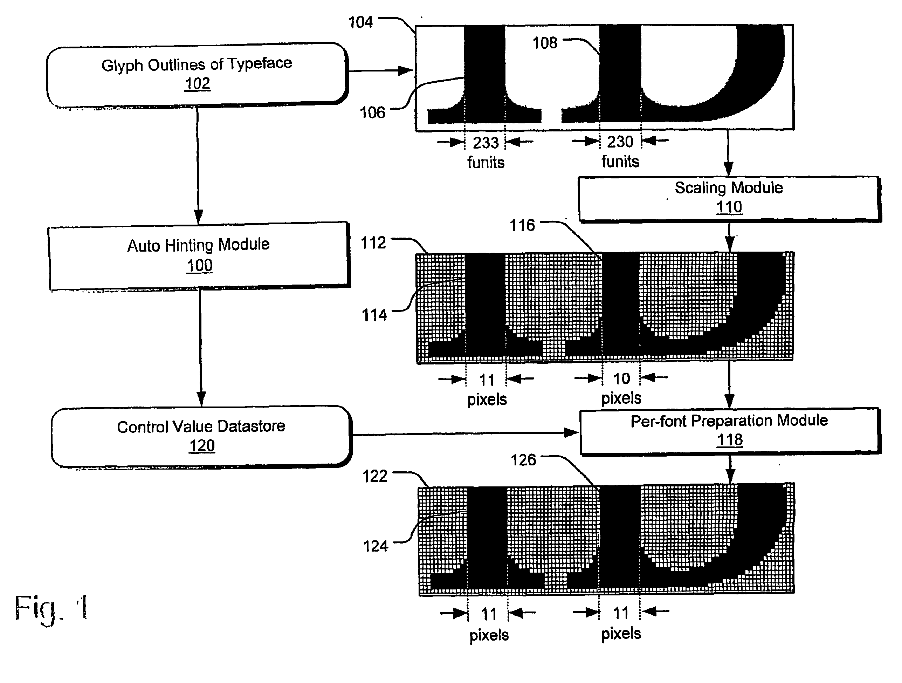

FIG. 1 illustrates an exemplary auto hinting module 100 in a font generation system. Representations 102 of glyph outlines in the typeface are stored in a font library or other data store. A graphic block 104 illustrates portions of exemplary glyphs: the vertical right stem 106 of an upper case "H" in Times New Roman and the bottom portion of an upper case "B" in Times New Roman, with a vertical left stem 108. The vertical right stem 106 has a stroke weight of 233 font units, based on the digitized outline. In contrast, the vertical left stem 108 has a stroke weight of 230, based on the digitized outline.

When the outlines are scaled (e.g., by a scaling module 110 of a text rendering system), rounding errors influenced by the display resolution may cause the two stroke weights to differ by a noticeable amount (see graphic block 112, in which the vertical right stem 114 is 11 pixels wide and the vertical left stem 116 is 10 pixels wide). Accordingly, a per-font preparation module 118 of the text rendering system extracts font control values from a control value datastore 120 (e.g., a control value table or CVT) with which to parameterize per-font instructions for achieving a more consistent rendering. In the example of FIG. 1, the font control value for vertical stroke weight equals 11. Therefore, as seen in graphic block 122, the per-font preparation module 118 has altered the scaled outline to yield a vertical right stem 124 of 11 pixels wide and a vertical left stem 126 of 11 pixels wide. In this manner, glyphs of a same font depict a consistent personality and readability when rendered at a specified size and display resolution, despite rounding errors introduced in the scaling operation.

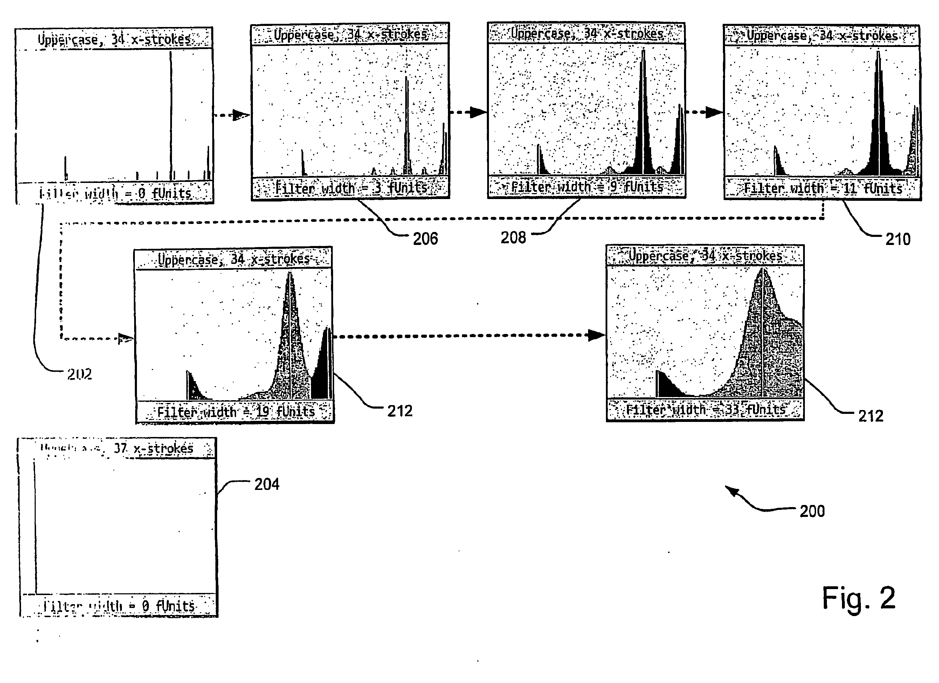

In one implementation for selecting font control values for the CVT, the auto hinting module 100 reads glyph outlines for a given typeface from a font library and generates distributions of specific font properties of each glyph outline (e.g., see distributions 202 and 204 of FIG. 2). Exemplary font properties may include without limitation:
- upper and lower case flat base - character baseline
- upper case round base - the amount by which round characters (such as an upper case "O") descend below the flat base line
- lower case round base - the amount by which round characters (such as a lower case "o") descend below the flat base line
- figure round base - the amount by which round figures (such as a number zero or "0") descend below the flat base line
- x-height flat - the height of flat-topped lower case characters (such as lower case "x")
- x-height round overlap - the amount by which round lower case characters (like "o") ascend above the x-height flat
- flat cap - the height of flat-topped upper case characters (like "X")
- round cap - - the amount by which round upper case characters (like "O") ascend above the flat cap
- numbers flat - the height of flat-topped numbers (like "7")
- numbers round top - the amount by which round figures (like "0") ascend above the numbers flat
- flat ascender - the height of flat topped lower case characters, ascending above the lower case "x" (such as lower case "1")
- flat descender - the height of flat bottomed lower case characters, descending below the lower case baseline (such as lower case "p")
- round descender - the height of round bottomed lower case characters, descending below the lower case baseline (such as lower case "g")
- space between the dot and the top of an 'i'

If the font property distribution across the typeface indicates a number of local maxima that does not exceed a CVT threshold, the auto hinting module 100 sets font control values in the control value table equal to these maxima. For example, it is possible that a distribution for a given font property is limited to a single value across the typeface. In this case, the control value corresponding to that font property is set to that single value. In most circumstances, however, the font property distribution can include many possible font property values spread across a range. Therefore, the auto hinting module 100 uses filtering techniques to select an appropriate number of font control values based on the font property distribution.

It should be understood that other distribution characteristics may be used to select font control values, including local minima of a font property differential, lowest extremes, highest extremes, or other statistical instruments, such as standard deviation points, medians, averages, etc. for discrete analysis, or calculus for continuous analysis.

FIG. 2 illustrates exemplary progressive filtering results 200. A distribution 202 represents a distribution of 34 vertical stroke weights across a set of glyphs in the Times New Roman typeface. Notice that the stroke weights (plotted along the horizontal axis in font units) vary from 88 font units to 232 font units. The y-axis represents the frequency of a given stroke weight. In contrast, the distribution 204 represents a distribution of 37 vertical stroke weights across a set of glyphs in the Courier New typeface. As Courier New is a typeface with almost perfectly uniform stroke weights across the typeface, the distribution of vertical stroke weights is almost a single value, measuring at about 84 font units. Both distributions 202 and 204 are unfiltered, as designated by the legend "Filter width = 0 funits".

In one implementation, in order to select a limited number of font control values, the auto hinting module uses a sequence of filtering operations until an acceptable number of local maxima are achieved (i.e., a CVT threshold). In one implementation, a filter that suppresses high-frequency data is used, and in particular, a Gaussian blur filter is used, although other filters are also contemplated, including a box filter, a sinc filter or other filter to reduce high frequency noise. By applying a Gaussian blur filter having a filter width of 3 font units to the distribution 202, the filtered distribution 206 is achieved. The auto hinting module counts the local maxima of the filter distribution (e.g., by walking along the distribution and counting the detected local maxima therein).

In the example of FIG. 2 a assuming a CVT threshold of the two is used. Although the filtered distribution 206 is smoothed somewhat in comparison to the unfiltered distribution 202, six local maxima fail to satisfy the CVT threshold condition. Therefore, a stronger filtering is applied (i.e., filter width of 9 font units) to achieve the filtered distribution 208. Again, the 5 local maxima fail to satisfy the CVT threshold condition. Progressive filtering continues with exemplary filtering results shown below:
- Filter width=11 font units 4 local maxima in filtered distribution 210
- Filter width=19 font units 3 local maxima in filtered distribution 212
- Filter width=33 font units 2 local maxima in filtered distribution 214

Filtered distribution 214 satisfies the CVT threshold condition of two. Accordingly, the x-values of the two local maxima (90 font units and 193 font units) are selected as the corresponding font control values relating to vertical stroke weight for the CVT of the Times New Roman typeface.

In alternative implementations, progressive filtering may involve cascading filters with differing properties, such that distributions at individual stages in the cascade exhibit progressively more pronounced filtering effects.

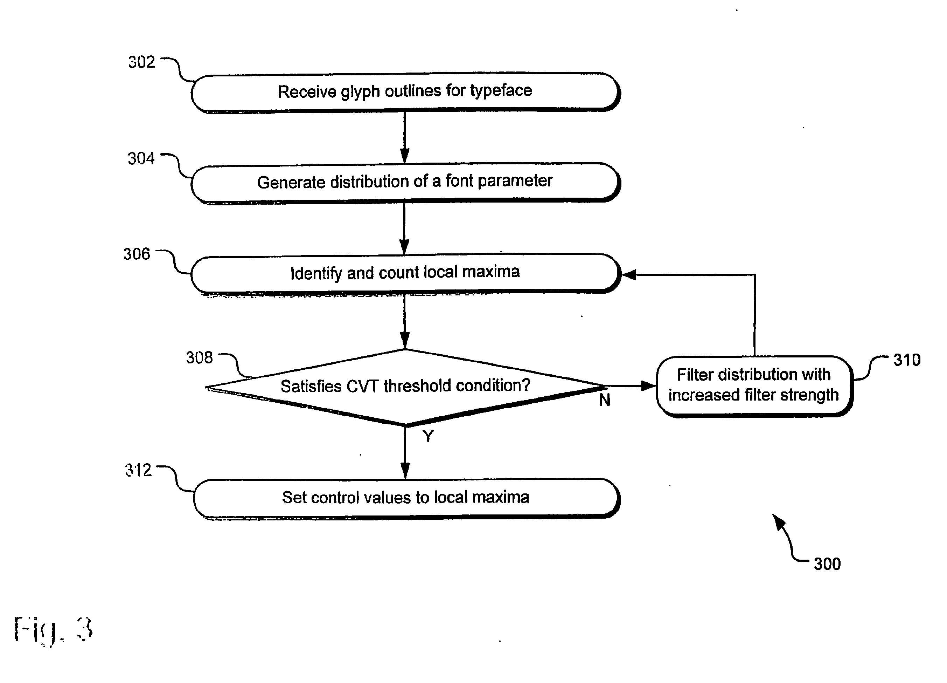

FIG. 3 illustrates exemplary operations 300 for automated font control value determination. A receiving operation 302 receives digitized glyph outlines for a given typeface, such as from a font library. A distribution module in the auto hinter executes a distribution operation 304 that generates a distribution of a font property from an analysis of the glyph outlines. In one implementation, for example, the distribution operation 304 identifies the highest point of flat-topped character glyphs as the "x-height flat" property and records the y coordinate aligned with this point for each glyph. In another implementation, the distribution operation 306 identifies significant vertical strokes and measures their widths for the "x stem weight" property distribution. Other font property distributions may be generated in a similar manner.

An identification module in the auto hinter executes a maxima operation 306 that identifies and counts local maxima in the font property distribution. In one implementation, the maxima operation 306 walks along the axis and detects points on the distribution having lower adjacent points on both sides. In alternative implementations, any standard calculus or other mathematical operations for identifying geometrical loci having extreme properties (e.g., maxima, minima, etc.) may be employed.

If the counted number of local maxima in the distribution is not greater than a CVT threshold, the CVT threshold condition is considered satisfied by a decision operation 308 and processing proceeds to a setting operation 312 (e.g., executed by a setting module of the auto hinter) that sets corresponding per-control values to the x coordinates of the local maxima. Otherwise, if the CVT threshold condition is not satisfied, a filtering operation 310 executed by a filtering module of the auto hinter filters the distribution to obtain a filtered distribution and processing returns to the maxima operation 306 to identify and count local maxima in the filtered distribution. At each iteration, the filtering strength is increased, as illustrated in and described with regard to FIG. 2, until the CVT threshold condition is satisfied and the font control values are set based on the local maxima values in the setting operation 312.

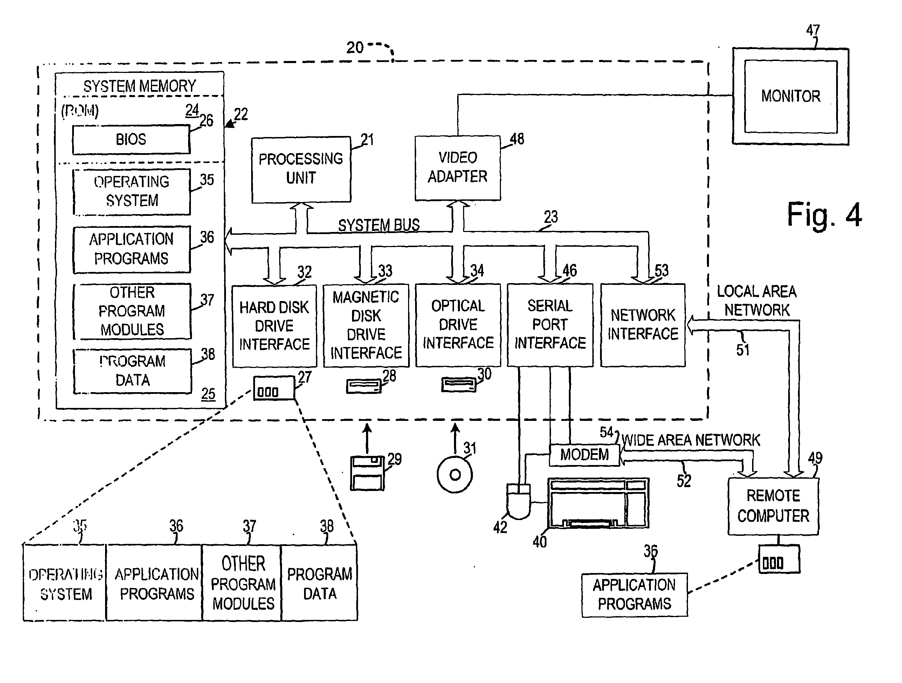

The exemplary hardware and operating environment of FIG. 4 for implementing the invention includes a general purpose computing device in the form of a computer 20, including a processing unit 21, a system memory 22, and a system bus 23 that operatively couples various system components including the system memory to the processing unit 21. There may be only one or there may be more than one processing unit 21, such that the processor of computer 20 comprises a single central-processing unit (CPU), or a plurality of processing units, commonly referred to as a parallel processing environment. The computer 20 may be a conventional computer, a distributed computer, or any other type of computer; the invention is not so limited.

The system bus 23 may be any of several types of bus structures including a memory bus or memory controller, a peripheral bus, a switched fabric, point-to-point connections, and a local bus using any of a variety of bus architectures. The system memory may also be referred to as simply the memory, and includes read only memory (ROM) 24 and random access memory (RAM) 25. A basic input/output system (BIOS) 26, containing the basic routines that help to transfer information between elements within the computer 20, such as during start-up, is stored in ROM 24. The computer 20 further includes a hard disk drive 27 for reading from and writing to a hard disk, not shown, a magnetic disk drive 28 for reading from or writing to a removable magnetic disk 29, and an optical disk drive 30 for reading from or writing to a removable optical disk 31 such as a CD ROM or other optical media.

The hard disk drive 27, magnetic disk drive 28, and optical disk drive 30 are connected to the system bus 23 by a hard disk drive interface 32, a magnetic disk drive interface 33, and an optical disk drive interface 34, respectively. The drives and their associated computer-readable media provide nonvolatile storage of computer-readable instructions, data structures, program modules and other data for the computer 20. It should be appreciated by those skilled in the art that any type of computer-readable media which can store data that is accessible by a computer, such as magnetic cassettes, flash memory cards, digital video disks, random access memories (RAMs), read only memories (ROMs), and the like, may be used in the exemplary operating environment

A number of program modules may be stored on the hard disk, magnetic disk 29, optical disk 31, ROM 24, or RAM 25, including an operating system 35, one or more application programs 36, other program modules 37, and program data 38. A user may enter commands and information into the personal computer 20 through input devices such as a keyboard 40 and pointing device 42. Other input devices (not shown) may include a microphone, joystick, game pad, satellite dish, scanner, or the like. These and other input devices are often connected to the processing unit 21 through a serial port interface 46 that is coupled to the system bus, but may be connected by other interfaces, such as a parallel port, game port, or a universal serial bus (USB). A monitor 47 or other type of display device is also connected to the system bus 23 via an interface, such as a video adapter 48. In addition to the monitor, computers typically include other peripheral output devices (not shown), such as speakers and printers.

The computer 20 may operate in a networked environment using logical connections to one or more remote computers, such as remote computer 49. These logical connections are achieved by a communication device coupled to or a part of the computer 20; the invention is not limited to a particular type of communications device. The remote computer 49 may be another computer, a server, a router, a network PC, a client, a peer device or other common network node, and typically includes many or all of the elements described above relative to the computer 20, although only a memory storage device 50 has been illustrated in FIG. 4. The logical connections depicted in FIG. 4 include a local-area network (LAN) 51 and a wide-area network (WAN) 52. Such networking environments are commonplace in office networks, enterprise-wide computer networks, intranets and the Internet, which are all types of networks.

When used in a LAN-networking environment, the computer 20 is connected to the local network 51 through a network interface or adapter 53, which is one type of communications device. When used in a WAN-networking environment, the computer 20 typically includes a modem 54, a network adapter, a type of communications device, or any other type of communications device for establishing communications over the wide area network 52. The modem 54, which may be internal or external, is connected to the system bus 23 via the serial port interface 46. In a networked environment, program modules depicted relative to the personal computer 20, or portions thereof, may be stored in the remote memory storage device. It is appreciated that the network connections shown are exemplary and other means of and communications devices for establishing a communications link between the computers may be used.

In an exemplary implementation, a scaling module, an auto hinting module, a per-font preparation module, a rendering module, a decision module, and other modules may be embodied by instructions stored in memory 404 and/or storage devices 408 and 410 and processed by the processing unit 402. Font definitions, font-hinting instructions, font property distributions, a CVT, CVT thresholds, rendered bitmaps, and other data may be stored in memory 404 and/or storage devices 408 and 410.

The technology described herein is implemented as logical operations and/or modules in one or more systems. The logical operations may be implemented as a sequence of processor-implemented steps executing in one or more computer systems and as interconnected machine or circuit modules within one or more computer systems. Likewise, the descriptions of various component modules may be provided in terms of operations executed or effected by the modules. The resulting implementation is a matter of choice, dependent on the performance requirements of the underlying system implementing the described technology. Accordingly, the logical operations making up the embodiments of the technology described herein are referred to variously as operations, steps, objects, or modules. Furthermore, it should be understood that logical operations may be performed in any order, unless explicitly claimed otherwise or a specific order is inherently necessitated by the claim language.

The above specification, examples and data provide a complete description of the structure and use of exemplary embodiments of the invention. Although various embodiments of the invention have been described above with a certain degree of particularity, or with reference to one or more individual embodiments, those skilled in the art could make numerous alterations to the disclosed embodiments without departing from the spirit or scope of this invention. In particular, it should be understood that the described technology may be employed independent of a personal computer. Other embodiments are therefore contemplated. It is intended that all matter contained in the above description and shown in the accompanying drawings shall be interpreted as illustrative only of particular embodiments and not limiting. Changes in detail or structure may be made without departing from the basic elements of the invention as defined in the following claims.

Although the subject matter has been described in language specific to structural features and/or methodological arts, it is to be understood that the subject matter defined in the appended claims is not necessarily limited to the specific features or acts descried above. Rather, the specific features and acts described above are disclosed as example forms of implementing the claimed subject matter.

## Claims

1. A method of generating one or more font control values for use in parameterizing font hinting instructions, wherein the font control values are associated with a typeface, the method comprising:
generating (304) a font property distribution (202) based on measurements of a font property of glyphs of the typeface;
generating a filtered font property distribution (212) by progressively filtering (310) the font property distribution (202) with increasingly stronger filter strengths until the filtered font property distribution satisfies a determined criterion including a threshold number of font control values; and
setting (312) the one or more font control values to font property values derived from the filtered font property distribution (212).

2. The method of claim 1 wherein the determined criterion represents a maximum number of local maxima in the filtered font property distribution, or
a maximum number of local minima in the filtered font property distribution.

3. The method of claim 1 wherein the operation of progressively filtering comprises:
identifying one or more local maxima in the filtered font property distribution; and counting the number of the one or more local maxima in the filtered font property distribution.

4. The method of claim 1 wherein the operation of progressively filtering comprises:
identifying one or more local minima in the filtered font property distribution; and counting the number of the one or more local minima in the filtered font property distribution.

5. The method of claim 1 wherein the determined criterion represents a maximum number of font control values associated with the font property of the typeface.

6. The method of claim 1 wherein the operation of progressively filtering comprises:
filtering the font property distribution using a Gaussian blur filter.

7. The method of claim 1 wherein the operation of progressively filtering comprises:
filtering the font property distribution at a first filter strength to generate an intermediate filtered font property distribution; and
filtering the font property distribution at a second filter strength to generate the filtered font distribution, if the intermediate filtered font property distribution does not satisfy the determined criterion, wherein the second filter strength is greater than the first filter strength.

8. A computer-readable medium having computer-executable instructions for performing a computer process implementing the method of anyone of the preceding claims.

9. A system for generating one or more font control values for use in parameterizing font hinting instructions, wherein the font control values are associated with a typeface; the system comprising:
a distribution module (304) that generates a font property distribution (202) based on measurements of a font property of glyphs of the typeface;
a filter module (310) that generates a filtered font property distribution (212) by progressively filtering the font property distribution (202) with increasingly stronger filter strengths until the filtered font property distribution satisfies a determined criterion including a threshold number of font control values; and
a control value setting module (312) that sets the one or more font control values to font property values derived from the filtered font property distribution (212).

10. The system of claim 9 wherein the determined criterion represents a maximum number of local maxima in the filtered font property distribution, or a maximum number of local minima in the filtered font property distribution.

11. The system of claim 9 wherein the filter module identifies one or more local maxima in the filtered font property distribution and counts the number of the one or more local maxima in the filtered font property distribution.

12. The system of claim 9 wherein the filter module identifies one or more local minima in the filtered font property distribution and counts the number of the one or more local minima in the filtered font property distribution.

13. The system of claim 9 wherein the determined criterion represents a maximum number of font control values associated with the font property of the typeface.

14. The system of claim 9 wherein the filter module progressively filters the font property distribution using a Gaussian blur filter.

15. The system of claim 9 wherein the filter module progressively filters the font property distribution at a first filter strength to generate an intermediate filtered font property distribution and filters the font property distribution at a second filter strength to generate the filtered font distribution, if the intermediate filtered font property distribution does not satisfy the determined criterion, wherein the second filter strength is greater than the first filter strength.

## Patentansprüche

1. Verfahren zur Generierung eines oder mehrerer Font-Steuerwerte zur Verwendung bei der Parametrisierung von Font-Hinting-Anweisungen, wobei die Font-Steuerwerte mit einer Schriftart verbunden sind, und wobei das Verfahren umfasst:
Generierung (304) einer Font-Eigenschaftsverteilung (202) basierend auf Messungen einer Font-Eigenschaft von Glyphen der Schriftart;
Generierung einer gefilterten Font-Eigenschaftsverteilung (212) durch schrittweise Filterung (310) der Font-Eigenschaftsverteilung (202) mit zunehmend stärkeren Filterstärken bis die gefilterte Font-Eigenschaftsverteilung einem festgelegten Kriterium, das einen Schwellenwert von Font-Steuerwerten umfasst, entspricht; und
Setzen (312) des einen oder der mehreren Font-Steuerwerte auf Font-Eigenschaftswerte, die aus der gefilterten Font-Eigenschaftsverteilung (212) abgeleitet sind.

2. Verfahren nach Anspruch 1, wobei das festgelegte Kriterium eine maximale Anzahl von lokalen Maxima in der gefilterten Font-Eigenschaftsverteilung oder eine maximale Anzahl von lokalen Minima in der gefilterten Font-Eigenschaftsverteilung darstellt.

3. Verfahren nach Anspruch 1, wobei die Operation der schrittweisen Filterung umfasst:
Identifizierung einer oder mehrerer lokaler Maxima in der gefilterten Font-Eigenschaftsverteilung; und
Zählen der Anzahl der einen oder mehreren lokalen Maxima in der gefilterten Font-Eigenschaftsverteilung.

4. Verfahren nach Anspruch 1, wobei die Operation der schrittweisen Filterung umfasst:
Identifizierung einer oder mehrerer lokaler Minima in der gefilterten Font-Eigenschaftsverteilung; und
Zählen der Anzahl der einen oder mehreren lokalen Minima in der gefilterten Font-Eigenschaftsverteilung.

5. Verfahren nach Anspruch 1, wobei das festgelegte Kriterium eine maximale Anzahl von Font-Steuerwerten, die mit der Font-Eigenschaft der Schriftart verbunden ist, darstellt.

6. Verfahren nach Anspruch 1, wobei die Operation der schrittweisen Filterung umfasst:
Filterung der Font-Eigenschaftsverteilung mit einem Gaußschen Weichzeichnungsfilter.

7. Verfahren nach Anspruch 1, wobei die Operation der schrittweisen Filterung umfasst:
Filterung der Font-Eigenschaftsverteilung bei einer ersten Filterstärke, um eine gefilterte Zwischenfont-Eigenschaftsverteilung zu generieren; und
Filterung der Font-Eigenschaftsverteilung bei einer zweiten Filterstärke, um die gefilterte Font-Verteilung zu generieren, wenn die gefilterte Zwischenfont-Eigenschaftsverteilung dem festgelegten Kriterium nicht entspricht, wobei die zweite Filterstärke größer als die erste Filterstärke ist.

8. Computerlesbares Medium mit computerausführbaren Anweisungen zur Durchführung eines Computerprozesses, der das Verfahren eines der vorangehenden Ansprüche implementiert.

9. System zur Generierung eines oder mehrerer Font-Steuerwerte zur Verwendung bei der Parametrisierung von Font-Hinting-Anweisungen, wobei die Font-Steuerwerte mit einer Schriftart verbunden sind, und wobei das System umfasst:
ein Verteilungsmodul (304), das eine Font-Eigenschaftsverteilung (202) basierend auf Messungen einer Font-Eigenschaft von Glyphen der Schriftart generiert;
ein Filtermodul (310), das eine gefilterte Font-Eigenschaftsverteilung (212) durch schrittweise Filterung der Font-Eigenschaftsverteilung (202) mit zunehmend stärkeren Filterstärken bis die gefilterte Font-Eigenschaftsverteilung einem festgelegten Kriterium, das einen Schwellenwert von Font-Steuerwerten umfasst, entspricht, generiert; und
ein Steuerwerteinstellungsmodul (312), das den einen oder die mehreren Font-Steuerwerte auf Font-Eigenschaftswerte, die aus der gefilterten Font-Eigenschaftsverteilung abgeleitet sind, setzt.

10. System nach Anspruch 9, wobei das festgelegte Kriterium eine maximale Anzahl von lokalen Maxima in der gefilterten Font-Eigenschaftsverteilung oder eine maximale Anzahl von lokalen Minima in der gefilterten Font-Eigenschaftsverteilung darstellt.

11. System nach Anspruch 9, wobei das Filtermodul ein oder mehrere lokale Maxima in der gefilterten Font-Eigenschaftsverteilung identifiziert und die Anzahl des einen oder der mehreren lokalen Maxima in der gefilterten Font-Eigenschaftsverteilung zählt.

12. System nach Anspruch 9, wobei das Filtermodul ein oder mehrere lokale Minima in der gefilterten Font-Eigenschaftsverteilung identifiziert und die Anzahl des einen oder der mehreren lokalen Minima in der gefilterten Font-Eigenschaftsverteilung zählt.

13. System nach Anspruch 9, wobei das festgelegte Kriterium eine maximale Anzahl von Font-Steuerwerten, die mit der Font-Eigenschaft der Schriftart verbunden ist, darstellt.

14. System nach Anspruch 9, wobei das Filtermodul die Font-Eigenschaftsverteilung mit einem Gaußschen Weichzeichnungsfilter schrittweise filtert.

15. System nach Anspruch 9, wobei das Filtermodul schrittweise die Font-Eigenschaftsverteilung bei einer ersten Filterstärke filtert, um eine gefilterte Zwischenfont-Eigenschaftsverteilung zu generieren, und die Font-Eigenschaftsverteilung bei einer zweiten Filterstärke filtert, um die gefilterte Font-Verteilung zu generieren, wenn die gefilterte Zwischenfont-Eigenschaftsverteilung dem festgelegten Kriterium nicht entspricht, wobei die zweite Filterstärke größer als die erste Filterstärke ist.

## Revendications

1. Procédé de génération d'une ou plusieurs valeurs de contrôle de polices de caractères destiné à être utilisé dans le paramétrage d'instructions d'optimisation de polices de caractères, dans lequel les valeurs de contrôle de polices de caractères sont associées à un type de caractères, le procédé consistant à :
générer (304) une distribution des propriétés de polices de caractères (202) sur la base de mesures d'une propriété de police de caractères de glyphes du type de caractères ;
générer une distribution des propriétés de polices de caractères filtrée (212) en filtrant progressivement (310) la distribution des propriétés de polices de caractères (202) avec des puissances de filtrage de plus en plus fortes jusqu'à ce que la distribution des propriétés de polices de caractères filtrée satisfasse un critère déterminé comprenant un nombre de seuils de valeurs de contrôle de polices de caractères ; et
ajuster (312) la ou les valeurs de contrôle de polices de caractères sur les valeurs des propriétés de polices de caractères dérivées de la distribution des propriétés de polices de caractères filtrée (212).

2. Procédé selon la revendication 1, dans lequel le critère déterminé représente un nombre maximal de maxima locaux dans la distribution des propriétés de polices de caractères filtrée, ou un nombre maximal de minima locaux dans la distribution des propriétés de polices de caractères filtrée.

3. Procédé selon la revendication 1, dans lequel l'opération de filtrage progressif consiste à :
identifier un ou plusieurs maxima locaux dans la distribution des propriétés de polices de caractères filtrée ; et
compter le nombre du ou des maxima locaux dans la distribution des propriétés de polices de caractères filtrée.

4. Procédé selon la revendication 1, dans lequel l'opération de filtrage progressif consiste à :
identifier un ou plusieurs minima locaux dans la distribution des propriétés de polices de caractères filtrée ; et
compter le nombre du ou des minima locaux dans la distribution des propriétés de polices de caractères filtrée.

5. Procédé selon la revendication 1, dans lequel le critère déterminé représente un nombre maximal des valeurs de contrôle de polices de caractères associées à la propriété de police de caractères du type de caractères.

6. Procédé selon la revendication 1, dans lequel l'opération de filtrage progressif consiste à :
filtrer la distribution des propriétés de polices de caractères au moyen d'un filtre flou gaussien.

7. Procédé selon la revendication 1, dans lequel l'opération de filtrage progressif consiste à :
filtrer la distribution des propriétés de polices de caractères à une première puissance de filtrage pour générer une distribution des propriétés de polices de caractères filtrée intermédiaire ; et
filtrer la distribution des propriétés de polices de caractères à une deuxième puissance de filtrage pour générer la distribution de polices de caractères filtrée, si la distribution des propriétés de polices de caractères filtrée intermédiaire ne satisfait pas au critère déterminé, la deuxième puissance de filtrage étant supérieure à la première puissance de filtrage.

8. Support lisible par ordinateur comportant des instructions exécutables par ordinateur pour réaliser un traitement informatique mettant en oeuvre le procédé selon l'une quelconque des revendications précédentes.

9. Système de génération d'une ou plusieurs valeurs de contrôle de polices de caractères destiné à être utilisé dans le paramétrage d'instructions d'optimisation de polices de caractères, dans lequel les valeurs de contrôle de polices de caractères sont associées à un type de caractères, le système comprenant :
un module de distribution (304) qui génère une distribution des propriétés de polices de caractères (202) sur la base des mesures d'une propriété de police de caractères de glyphes du type de caractères ;
un module de filtrage (310) qui génère une distribution des propriétés de polices de caractères filtrée (212) en filtrant progressivement la distribution des propriétés de polices de caractères (202) avec des puissances de filtrage de plus en plus fortes jusqu'à ce que la distribution des propriétés de polices de caractères filtrée satisfasse à un critère déterminé comprenant un nombre de seuils de valeurs de contrôle de polices de caractères; et
un module d'ajustement de valeurs de contrôle (312) qui ajuste la ou les valeurs de contrôle de polices de caractères aux valeurs des propriétés de polices de caractères dérivées de la distribution des propriétés de polices de caractères filtrée (212).

10. Système selon la revendication 9, dans lequel le critère déterminé représente un nombre maximal de maxima locaux dans la distribution des propriétés de polices de caractères filtrée, ou un nombre maximal de minima locaux dans la distribution des propriétés de polices de caractères filtrée.

11. Système selon la revendication 9, dans lequel le module de filtrage identifie un ou plusieurs maxima locaux dans la distribution des propriétés de polices de caractères filtrée et compte le nombre du ou des maxima locaux dans la distribution des propriétés de polices de caractères filtrée.

12. Système selon la revendication 9, dans lequel le module de filtrage identifie un ou plusieurs minima locaux dans la distribution des propriétés de polices de caractères filtrée et compte le nombre du ou des minima locaux dans la distribution des propriétés de polices de caractères filtrée.

13. Système selon la revendication 9, dans lequel le critère déterminé représente un nombre maximal de valeurs de contrôle de polices de caractères associées à la propriété de police de caractères du type de caractères.

14. Système selon la revendication 9, dans lequel le module de filtrage filtre progressivement la distribution des propriétés de polices de caractères au moyen d'un filtre flou gaussien.

15. Système selon la revendication 9, dans lequel le module de filtrage filtre progressivement la distribution des propriétés de polices de caractères à une première puissance de filtrage pour générer une distribution des propriétés de polices de caractères filtrée intermédiaire et filtre la distribution des propriétés de polices de caractères à une deuxième puissance de filtrage pour générer la distribution de polices de caractères filtrée, si la distribution des propriétés de polices de caractères filtrée intermédiaire ne satisfait pas au critère déterminé, la deuxième puissance de filtrage étant supérieure à la première puissance de filtrage.
